# EUROPÄISCHE PATENTANMELDUNG

(11) **EP 1 253 768 A2**
(43) Veröffentlichungstag der Anmeldung: **30.10.2002**
(21) Anmeldenummer: 02009148.4
(22) Anmeldetag: 24.04.2002
(51) Int. Cl.: H04M 3/42

(54) **Verfahren zur Steuerung von Hörtönen und/oder Rufzeichen und/oder optischen Anzeigen und Telekommunikationssystem**

(30) Priorität: 24.04.2001 DE 10120039
(71) Anmelder: Tenovis GmbH & Co. KG, 60326 Frankfurt (DE)
(72) Erfinder: Baik, Thorsten, 41066 Mönchengladbach (DE); Hiller, Helmut, 40599 Düsseldorf (DE); Kayser, Udo, 42285 Wuppertal (DE); Pohler, Walter, 41564 Karst (DE); Schneider, Norbert, 47800 Krefeld (DE)
(74) Vertreter: Heinze, Ekkehard, Dipl.-Phys. Dr.

(57) **Zusammenfassung**

Die Erfindung betrifft ein Verfahren zur Steuerung von Hörtönen und/oder Rufzeichen und/oder optischen Anzeigen von Telekommunikationsendgeräten, die an mindestens zwei private Telekommunikationsanlagen (21, 23) angeschlossen sind, und von mit der Steuerung zusammenhängenden vermittlungstechnischen Abläufen in den Telekommunikationsanlagen (21, 23) in auf QSIG-Standard basierenden Telekommunikationsnetzen, wobei einem mit einer QSIG-Verbindungsmeldung (24a, 24b; 27a, 27b; 31a, 31b) zwischen den Telekommunikationsanlagen (21, 23) übertragenen Leistungsmerkmal (25a, 25b; 29a, 29b; 33a, 33b) neudefinierte Steuerdaten (26a, 26b; 30a, 30b; 34a, 34b) zur Steuerung der Hörtöne bzw. Rufzeichen bzw. optischen Anzeigen des empfangenden Telekommunikationsendgerätes und der vermittlungstechnischen Abläufe der Telekommunikationsanlagen (21, 23) mitgegeben werden, wobei die Telekommunikationsanlagen (21, 23) über auf QSIG-Standard basierenden Leitungen miteinander verbunden sind und die Steuerdaten (26a, 26b; 30a, 30b; 34a, 34b) auf den Telekommunikationsanlagen und den auf QSIG-Standard basierenden Leitungen verteilt sind sowie mittels die Leitungen steuernden Prozesse erzeugt werden.

## Beschreibung

Die Erfindung betrifft ein Verfahren zur Steuerung von Hörtönen und/oder Rufzeichen und/oder optischen Anzeigen von Telekommunikationsendgeräten, die an mindestens zwei private Telekommunikationsanlagen (21, 23) angeschlossen sind, und von mit der Steuerung zusammenhängenden vermittlungstechnischen Abläufen in den Telekommunikationsanlagen (21, 23) in auf QSIG-Standard basierenden Telekommunikationsnetzen gemäß dem Oberbegriff des Patentanspruches 1 sowie ein Telekommunikationssystem gemäß dem Oberbegriff des Patentanspruches 10.

Verfahren zur Steuerung von Hörtönen, Rufzeichen und optischen Anzeigen sind aus herkömmlichen analogen und digitalen Telekommunikationsnetzen, insbesondere ISDN-Kommunikationsnetzen bekannt. Diese Verfahren verwenden Signalisierungsdaten, die in Antwort auf einen von einem sendenden Telekommunikationsendgerät und/oder einer Telekommunikationsanlage ausgehenden Anruf von dem empfangenden Telekommunikationsendgerät und/oder der Telekommunikationsanlage zurückgesendet werden und ein "Besetzt"-Zeichen oder "Frei"-Zeichen beinhalten. Demzufolge wird, wenn das empfangende Gerät bzw. die empfangende Anlage momentan keinen unbelegten Eingangsanschluß aufweist, dem eingehenden Anruf ein "Besetzt"-Zeichen zugeordnet, welches anschließend an den Anrufenden zurückgesendet wird und dort in dessen Endgerät als ein "Besetzt"-Hörton oder als Anzeige auf dem Display des Endgerätes wiedergegeben wird.

Private Kommunikationsnetze, die zwischen Telekommunikationsanlagen verschiedener Hersteller aufgebaut werden, basieren häufig auf dem QSIG-Standard (Q-Interface-Signalling-Standard). Das für die Signalisierung zwischen zwei privaten Vermittlungsknoten, die zum Beispiel als Telekommunikationsanlagen ausgebildet sind, am Q-Referenzpunkt stehende QSIG ist - ebenso wie PSS1 (Private Integrated Signalling System Number 1) - ein Signalisierungsverfahren, das international und für den europäischen Raum standardisiert ist. Die Standardisierung erfolgt auf internationaler Ebene durch ISO/IEC und im europäischen Raum durch die ETSI und ECMA, wobei eine gegenseitige Harmonisierung der Standards angestrebt wird.

QSIG ist offen für Hersteller von Telekommunikationsanlagen, d.h. nur wenige Leistungsmerkmale und Verbindungsmeldungen sind standardisiert. Es ermöglicht daher insbesondere die Signalisierung und damit Kommunikation zwischen Telekommunikationsanlagen, wie PINX-Anlagen (Private Integrated Service Digital Network Exchange), von verschiedenen Herstellern, sofern diese Telekommunikationsanlagen nach QSIG-Standard signalisieren. QSIG bzw. PSS1 definieren ein ISDN (Integrated Services Digital Network) für die Teilnehmer eines privaten Kommunikationsnetzes. Hierbei ist ISDN eine digitale Vermittlungstechnik, die alle vermittlungstechnischen Dienste (zum Beispiel Sprache, Daten, Video und Fax) in ein digitales Leitungsnetz integriert. ISDN stellt eine Schnittstelle dar, um digitale Dienste unabhängig von der Leitungsart oder der Nutzung der Leitungen zu verwenden.

Folgende Standards beschreiben die grundlegende Kommunikation bei QSIG, die sogenannten Basic Calls: ETS 300 172 Edition 3, ISO/IEC 11572 Edition 2 und ECMA 143 3^{rd} Edition. Im Standard sind die Basisfunktionen der Signalisierung definiert. Zusätzliche Funktionen (im internationalen Sprachgebrauch: Supplementary Services) sind als weitere Zusatzdienste für QSIG spezifiziert. Diese Supplementary Services können ebenso wie zusätzliche standardisierte Leistungsmerkmale mittels sog. "Generic Functions" auf dem Basic Call ähnlich einem Baukastenprinzip aufgesetzt werden. Hierbei stellen die Generic Functions Signalisierungsprotokolle für den Transport von Protokoll-Informationen dar, die Teil eines Supplementary Services oder eines Leistungsmerkmales (Additional Network Feature, ANF) in dem privaten Telekommunikationsnetz sind. Folgende Standards beschreiben die Generic Functions: ETS 300 239 Edition 2, ISO/IEC 11582 Edition 1 und ECMA 165.

Eines der zusätzlichen standardisierten Leistungsmerkmale in auf QSIG basierenden Kommunikationsnetzen ist das Leistungsmerkmal COMMON-INFORMATION nach den QSIG-Standards ISO/IEC 15772 und ISO/IEC 15771. Dieses Leistungsmerkmal ermöglicht den Austausch von allgemeinen Informationen zwischen den Telekommunikationsendgeräten und/oder Telekommunikationsanlagen, basierend auf einem QSIG-Signalisierungsprotokoll. Die allgemeinen Informationen umfassen eine Vielzahl verschiedenster, sich auf den Teilnehmer oder das Endgerät bzw. die Anlage beziehender Informationen an den Verbindungsenden, wie beispielsweise die Teilnehmerkategorie, die Identität der verwendeten Anlagen bzw. Endgeräte und ähnliches. Nach Übertragung dieser allgemeinen Informationen an ein empfangendes Endgerät bzw. eine Anlage können diese Informationen dort angezeigt oder weiterverarbeitet werden. Diese in dem Leistungsmerkmal COMMON-INFORMATION enthaltenden allgemeinen Informationen beinhalten jedoch nicht bestimmte Informationen, die die Handhabung des Endgerätes für den Nutzer erleichtern und sicherer machen.

Demzufolge liegt der vorliegenden Erfindung die Aufgabe zugrunde, ein gattungsgemäßes Verfahren zur Verfügung zu stellen, welches das Wiedergeben und Erkennen von weiteren Anrufinformationen in dem die Verbindungsmeldungen empfangenden Telekommunikationsendgerät und/oder Telekommunikationsanlage auf einfache Weise ermöglicht. Der Erfindung liegt ebenso die Aufgabe zugrunde, eine Vorrichtung zur Durchführung des Verfahrens aufzuzeigen.

Diese Aufgabe wird durch ein Verfahren nach Patentanspruch 1 bzw. durch ein Telekommunikationssystem nach Patentanspruch 10 gelöst.

Ein wesentlicher Punkt der Erfindung ist darin zu sehen, dass bei einem Verfahren zur Steuerung von Hörtönen und/oder Rufzeichen und/oder optischen Anzeigen von Telekommunikationsendgeräten, die an mindestens zwei private Telekommunikationsanlagen angeschlossen sind, und von mit der Steuerung zusammenhängenden vermittlungstechnischen Abläufen in den Telekommunikationsanlagen in auf QSIG-Standard basierenden Telekommunikationsnetzen neu definierte Steuerdaten zur Steuerung der Hörtöne bzw. Rufzeichen bzw. optischen Anzeigen des empfangenden Telekommunikationsendgerätes und der vermittlungstechnischen Abläufe der Telekommunikationsanlagen mit einer QSIG-Verbindungsmeldung mitgegeben werden. Hierbei sind die Telekommunikationsanlagen über auf QSIG-Standard basierenden Leitungen miteinander verbunden und die Steuerdaten auf den Telekommunikationsanlagen und den auf QSIG-Standard basierenden Leitungen verteilt. Die Steuerdaten werden mittels die Leitungen steuernden Prozesse erzeugt.

Ein mit der QSIG-Verbindungsmeldung übertragenes Leistungsmerkmal, mit dem die neu definierten Steuerdaten übertragen werden, wird von einer sendenden Kommunikationseinrichtung, die ein Telekommunikationsendgerät oder ein Anschluß für den Zugang zu einer Amtsleitung sein kann, zu einem empfangenden Endgerät übertragen. Ein derartiges Leistungsmerkmal kann ein erweitertes Leistungsmerkmal COMMON-INFORMATION sein.

Diese Erweiterung findet mittels MSE (Manufacturer Specific Extension to a standardized operation) statt. Eine solche Erweiterung des standardisierten Leistungsmerkmals kann mittels MSE auf einfache Weise durchgeführt werden, da auf QSIG-Standard basierende Kommunikationsnetze für solche Erweiterungen jenseits von Standardisierungen offen sind.

Auf diese Weise kann einem angerufenen Teilnehmer, sofern die sendende Anlage bzw. das sendende Endgerät (nachfolgend Ursprungsanlage bzw. Ursprungsendgerät genannt) das Leistungsmerkmal um die Steuerdaten zur Steuerung von Hörtönen und/oder optischen Anzeigen erweitert hat, auf seinem empfangenden Endgerät bzw. Anlage (nachfolgend Zielanlage bzw. Zielendgerät genannt) schnell und einfach angezeigt werden, welcher Art der Anruf ist. Mögliche Anrufsarten sind interne und externe Anrufe bzgl. der Telekommunikationsanlage oder des gesamten Telekommunikationsnetzes, Anrufe mit hoher oder niedrigerer Priorität, Notfallanrufe, Betreiberanrufe oder Anrufe vom Typ Doppelgespräch.

Die Erweiterung des standardisierten Leistungsmerkmals COMMON-INFORMATION mittels MSE wird mit den Generic Functions und dem zur Steuerung des Leistungsmerkmals standardisierten ROSE (Remote Operation Service Elements)-Konzept durchgeführt. Das ROSE-Konzept definiert die Umgebung im QSIG-Standard, um zusätzliche Funktionen zu realisieren. Das ROSE-Konzept findet Anwendung bei standardisierten Leistungsmerkmalen, wird aber auch zur Steuerung herstellerspezifischer, zusätzlicher Leistungsmerkmale, die wie im vorliegenden Fall die Erweiterung eines Leistungsmerkmals darstellen, eingesetzt. Im allgemeinen definiert ROSE fünf Aktionen:

### RO-Invoke:

Eine Operation wird durch diese Aktion aufgerufen, d.h. die Operation wird bei der Partnerinstanz, also der gerufenen Telekommunikationsanlage, ausgelöst.

### RO-Result:

Hier wird das positive Ergebnis einer Operation gemeldet, d.h. der Aufruf der Operation ist erfolgreich.

### RO-Error:

Diese Aktion meldet ein negatives Ergebnis einer Operation, d.h. die Operation wurde nicht ausgeführt.

### RO-Reject-U:

Diese Aktion wird durchgeführt, wenn eine Aufforderung im Fehlerfall durch den Benutzer des Dienstes abgewiesen wird.

### RO-Reject-E:

Hier wird eine Anforderung im Fehlerfall durch den Erbringer des Dienstes abgewiesen.

Diese ROSE-Aktionen werden auf vier Protokollelemente abgebildet. Solche Protokollelemente werden im Englischen als Application Protocol Data Unit (APDU) bezeichnet. Die vier Protokollelemente sind: RO-Invoke, RO-Return-Result, RO-Return-Error, RO-Reject.

Die ROSE-Protokollelemente werden mittels des FACILITY-Information-Elements übertragen. Das FACILITY-Information-Element wird entweder mit Basismeldungen (Meldungen, die einen Verbindungsaufbau und Verbindungsabbau steuern, wie SETUP, ALERT, CONNECT, PROGRESS oder DISCONNECT) übertragen oder, falls keine Basismeldungen zur Verfügung stehen, mit der dann zu verwendenden Meldung FACILITY. Mehrere ROSE-Protokollelemente können in einem FACILITY-Informationselement enthalten sein. Somit können die Steuerdaten, die dem standardisierten Leistungsmerkmal COMMON-INFORMATION zugeordnet sind, entweder mit den für den Verbindungsaufbau und Verbindungsabbau zuständigen Meldungen oder mit einer separaten Meldung FACILITY von der Ursprungsanlage zu der Zielanlage übertragen werden. Hierbei können zwischen der Ursprungs- und der Zielanlage beliebig viele Transit-Anlagen zum transparenten Transport des erweiterten Leistungsmerkmals und der Verbindungsmeldungen angeordnet sein.

Im Gegensatz zu auf dem ISDN-Standard basierenden Netzen, bei denen nur derjenige Punkt in dem Netz betrachtet wird, bei dem ein Teilnehmer an das Netzwerk geschaltet ist, so dass sich alle Funktionsmerkmale in diesem Punkt bündeln, ist bei auf QSIG-Standard basierenden Kommunikationsnetzen die Steuerung eines Merkmals nicht auf einen Punkt innerhalb des Netzes konzentriert, sondern erfolgt verteilt auf mehrere Knoten des Kommunikationsnetzes. Die Verbindungen von Telekommunikationsanlagen im QSIG-Netz sind symmetrisch aufgebaut, so dass es keine Unterscheidung zwischen einem Teilnehmer und dem Netz bezüglich der Steuerung eines Merkmals gibt. Vorzugsweise enthalten die Steuerdaten zusätzlich Angaben über die Art einer mit einer rufenden vorzugsweise als erstes Telekommunikationsendgerät oder Anschluß zu einer Amtsleitung ausgebildete Kommunikationseinrichtung bestehenden weiteren Verbindung, insbesondere eines Telekommunikationsanlagen-internen Anrufs oder Telekommunikationsanlagen-externen Anrufs, wobei die Steuerdaten Informationen über die neue und die bestehende weitere Verbindung des rufenden Teilnehmers enthalten und die Steuerdaten Hörtöne und/oder Rufzeichen und/oder optische Anzeigen eines gerufenen Telekommunikationsendgerätes steuern.

Gemäß einer bevorzugten Ausführungsform kann bei Verbindungen, die auf einer Rückfrage basierend aufgebaut werden, dem dem Zielendgerät zugeordneten Teilnehmer einer Zweitverbindung über Hörtöne oder Rufzeichen oder optische Anzeigen signalisiert werden, ob die Erstverbindung auf einem QSIG-netzinternen oder externen Gespräch basiert. Aus einer solchen Steuerung der Hörtöne bzw. Rufzeichen bzw. der optischen Anzeige auf dem Zielendgerät der Zweitverbindung läßt sich somit ableiten, ob ein wichtiges oder weniger wichtiges Gespräch in der Erstverbindung aufgebaut ist.

Alternativ können Berechtigungsüberprüfungen von der Telekommunikationsanlage der Zweitverbindung durchgeführt werden. Somit kann auf schnelle und einfache Weise in der Zweitverbindung festgestellt werden, ob der Teilnehmer der Erstverbindung eine vollständige, halbe oder keine Amtsberechtigung aufweist.

Gemäß einer bevorzugten Ausführungsform werden zur Steuerung von Hörtönen und/oder Rufzeichen und/oder optischen Anzeigen von der mit der rufenden Einrichtung verbundenen Telekommunikationsanlage diejenigen Steuerdaten, die von der mit dem empfangenden Telekommunikationsendgerät verbundenen Telekommunikationsanlage gesendet werden, ausgewertet.

In vorteilhafter Weise kann das erfindungsgemäße Verfahren sowie das erfindungsgemäße Telekommunikationssystem in auf dem QSIG-Standard basierenden Festverbindungen oder Wählverbindungen genutzt werden. Das Verfahren und das System können auch auf QSIG basierenden IP-Gateways angewendet werden, die in der Regel Telekommunikationsanlagen für den Zugang zu dem Internet darstellen. Die Verbindungen können sowohl vollständig als auch in Teilen aus Telekommunikationsnetzen bestehen, die auf dem QSIG-Standard basieren. Demzufolge ist eine vielseitige Anwendung des erfindungsgemäßen Verfahrens und des erfindungsgemäßen Systems für verschiedene Verbindungsarten und unterschiedliche Kommunikationsnetze denkbar.

Weitere vorteilhafte Ausführungsformen ergeben sich aus den Unteransprüchen sowie der nachfolgenden Beschreibung bevorzugter Ausführungsbeispiele, die anhand der Abbildungen näher erläutert werden. Hierbei zeigen:
- Fig. 1: eine schematische Darstellung eines QSIG-Protokollmodells mit integriertem Steuerungssystem zur Steuerung von Hörtönen und Anzeigen,
- Fig. 2: ein Ablaufdiagramm gemäß einer ersten Ausführungsform des erfindungsgemäßen Verfahrens,
- Fig. 3: ein Ablaufdiagramm gemäß einer zweiten Ausführungsform des erfindungsgemäßen Verfahrens,
- Fig. 4: ein Ablaufdiagramm gemäß einer dritten Ausführungsform des erfindungsgemäßen Verfahrens, und
- Fig. 5: eine Darstellung der formalen Beschreibung des erfindungsgemäßen Verfahrens in einer in QSIG üblichen Form.

In der nachfolgenden Beschreibung werden für gleiche und gleichwirkende Teile dieselben Bezugsziffern verwendet.

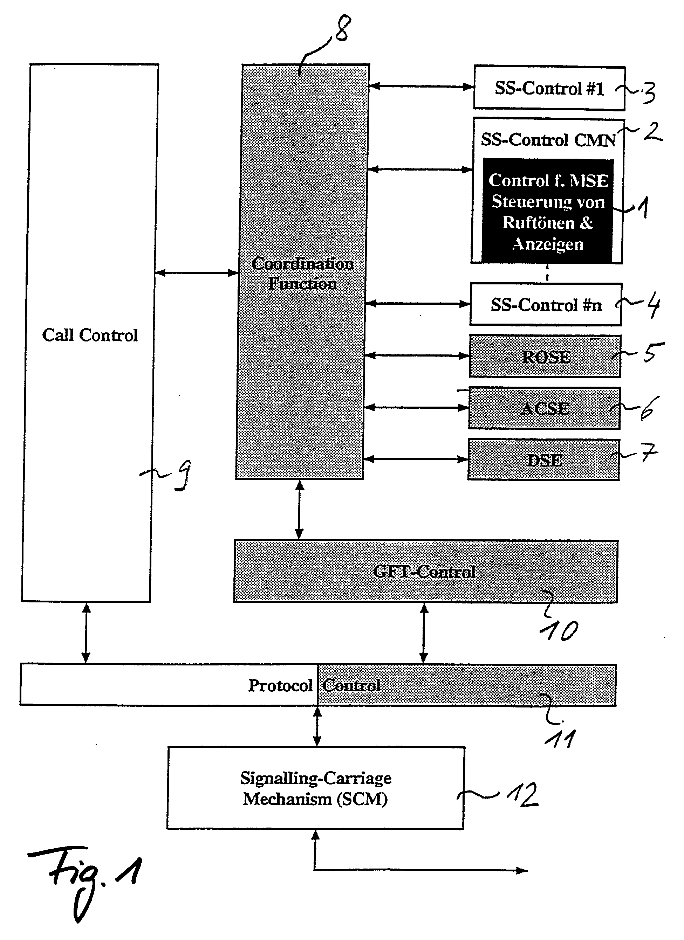

In Figur 1 ist ein QSIG-Protokollmodell mit integriertem Steuerungssystem 1 zur Steuerung von Hörtönen und/oder optischen Anzeigen dargestellt. Das Steuerungssystem 1 stellt als zusätzliches Leistungsmerkmal eine Erweiterung des Leistungsmerkmales COMMON-INFORMATION (CMN) dar. Dieses Leistungsmerkmal 2 ist eines von 1-n standardisierten Leistungsmerkmalen 3 und 4.

Sowohl die Leistungsmerkmale 2, 3 und 4 als auch das ROSE-Konzept 5, das ACSE(Association Control Service Elements)-Protokoll 6 und das DSE(Dialog Service Element)-Protokoll 7 sind an eine Einheit 8 zur Koordinierung aller Funktionen angeschlossen. Die Einheit 8 steht sowohl mit einer Steuerungseinheit 10 für die Generic Functions als auch mit einer Steuerungseinheit 9 für das Gespräch in Verbindung. Die Generic Functions, welche als Signalisierungsprotokoll für den Transport von Informationen, insbesondere der Leistungsmerkmale 2, 3 und 4 der Einheit 8 zur Koordinierung der Funktionen zugeordnet ist, wird ebenso wie die Steuereinheit 9 zur Steuerung des Gespräches durch die Steuerungseinheit 11 des QSIG-Gesamtprotokolls gesteuert. Durch die gemeinsame Steuerung mittels der Steuereinheit 11 ergibt sich eine Koordinierung von dem zu übertragendem Gespräch mit den zu übertragenden Verbindungsmeldungen sowie den Leistungsmerkmalen. Die Steuereinheit 11 zur Steuerung des QSIG-Protokolls bewirkt unter Zuhilfenahme der Dienste aus einer Einheit 12 des Signalling Carriage Mechanism (SCM) das Zuordnen von Verbindungsmeldungen zwischen zwei PINX-Anlagen (Private Integrated Network Exchanges).

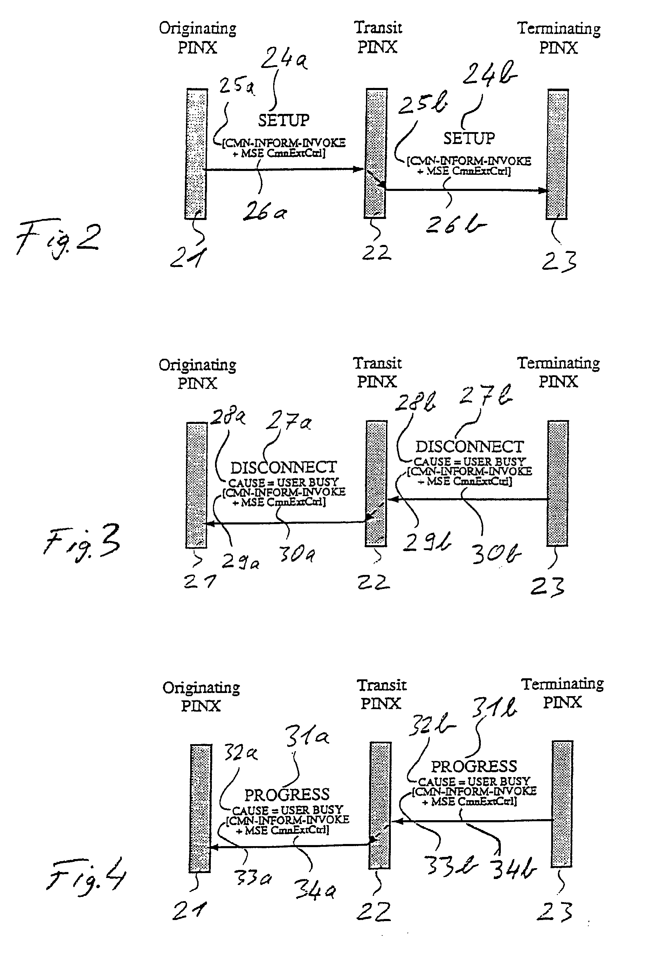

Figur 2 zeigt eine erste Ausführungsform des erfindungsgemäßen Verfahrens. In einer zwischen drei PINX-Anlagen 21, 22 und 23 bestehenden Verbindung, deren Signalisierung auf dem QSIG-Standard basiert, wird von der Ursprungsanlage 21 die Verbindungsmeldung SETUP mit dem Bezugszeichen 24a an die Transitanlage 22 gesendet. Die Transitanlage 22, welche zum transparenten Weitertransport der Verbindungsmeldung an die Zielanlage 23 geeignet ist, sendet die bei ihr eingehende Verbindungsmeldung 24a als Verbindungsmeldung 24b mit gleichem Inhalt an die Zielanlage 23 weiter.

Das Leistungsmerkmal COMMON-INFORMATION 25a und 25b wird unverändert von der Ursprungsanlage 21 über die Transitanlage 22 zu der Zielanlage 23 gesendet. Beim Absenden der Verbindungsmeldung 24a wird in der Ursprungsanlage das Leistungsmerkmal 25a um die Steuerdaten 26a zur Steuerung der Hörtöne und der optischen Anzeigen der empfangenden Zielanlage 23 mittels MSE erweitert. Eine solche Erweiterung findet durch die in der SETUP-Meldung 24a enthaltende APDU "Common-Information-Inform" statt.

Die in dem erweiterten Leistungsmerkmal 25b enthaltenden Steuerdaten 26b zeigen dem angerufenen Teilnehmer per Rufton oder optischer Anzeige auf seiner Zielanlage 23 an, ob es sich um ein internes oder externes Gespräch, ein Gespräch mit hoher oder niedriger Priorität, einem Notfallgespräch oder einem Gespräch vom Typ Attendant-Call oder Double-Call handelt. Abhängig von der über die Anzeige oder die Ruftöne stattfindende Benachrichtigung kann der angerufene Teilnehmer entweder selbst entscheiden oder durch die Zielanlage 23 entscheiden lassen, ob das Gespräch angenommen, zurückgestellt oder abgebrochen wird.

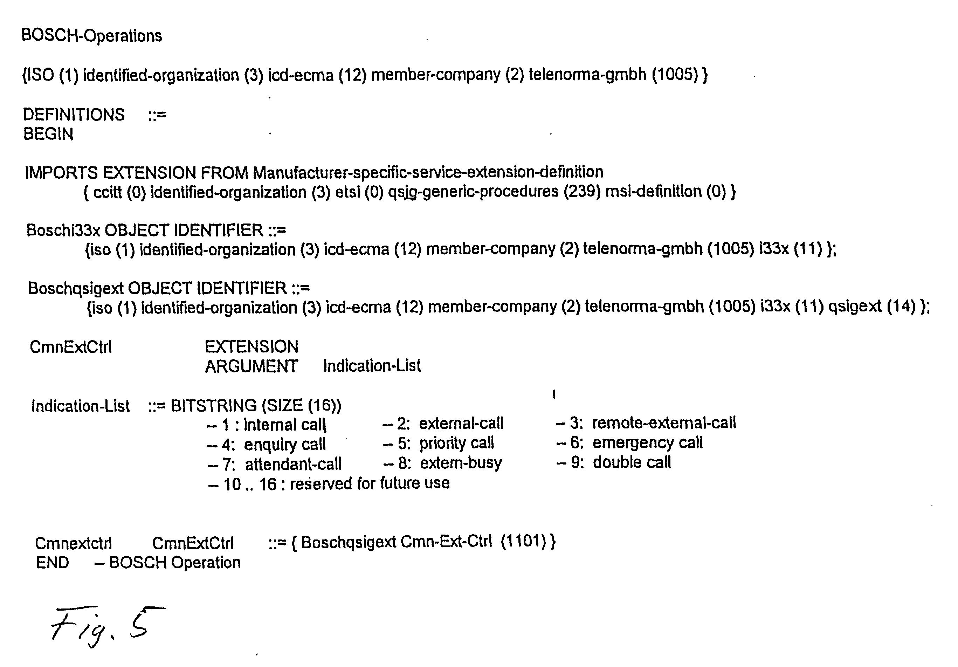

In der in Figur 3 dargestellten zweiten Ausführungsform des erfindungsgemäßen Verfahrens wird der dem anrufenden Teilnehmer zugeordneten Ursprungsanlage 21 in Antwort auf den Anruf bei der Zielanlage 23 eine Verbindungsmeldung DISCONNECT 27a und 27b über die Transitanlage 22 zurückgesendet, da die Eingangsanschlüsse der Zielanlage 23 alle besetzt sind. Diese Verbindungsmeldung DISCONNECT enthält das Cause-Information-Element 28a, 28b, welches die Information des Besetztseins beinhaltet. Das mit der Verbindungsmeldung 27a und 27b mit übertragene Leistungsmerkmal 29a und 29b ist um ein zusätzliches Leistungsmerkmal (Teilleistungsmerkmal) 30a und 30b, nämlich die Steuerdaten zur Steuerung der Ruftöne und der optischen Anzeigen der Ursprungsanlage 21, ergänzt.

Sobald die Steuerdaten an der Ursprungsanlage 21 zusammen mit der Verbindungsmeldung 27a angekommen sind, wird dem Teilnehmer der Ursprungsanlage 21 durch verschieden hohe Töne oder verschiedene Tonabfolgen oder durch eine optische Anzeige angezeigt, ob der besetzte Teilnehmer an der Zielanlage 23 ein internes oder externes Gespräch führt. Eine Anzeigeeinrichtung kann dann das Zeichnen "Besetzt" oder "Extern besetzt" wiedergeben. Abhängig von dieser Information kann der die Ursprungsanlage 21 benutzende anrufende Teilnehmer entscheiden, ob er in das momentan geführte Gespräch mit eintreten, bei der Zielanlage 23 anklopfen oder den Hörer auflegen und das Gespräch beenden möchte.

Der Ablauf der in Figur 4 gezeigten dritten Ausführungsform des erfindungsgemäßen Verfahrens entspricht weitestgehend dem Ablauf gemäß der zweiten Ausführungsform. Im Unterschied zu dieser wird jedoch in der dritten Ausführungsform in Antwort auf den Anruf des der Ursprungsanlage 21 zugeordneten Teilnehmers nicht die Verbindungsmeldung DISCONNECT, sondern die Verbindungsmeldung PROGRESS 31a und 31b von der Zielanlage 23 zurückgesendet. Die Verbindungsmeldung 31a und 31b führt dazu, daß die Verbindung zwischen Ursprungs- und Zielanlage 21 und 23 weiterhin aufrechterhalten wird, auch wenn dem die Ursprungsanlage 21 benutzenden Teilnehmer das Cause-Information-Element 32a und 32b für die Situation des Besetztseins und das Leistungsmerkmal 33a und 33b zusammen mit den Steuerdaten 34a und 34b zugesendet wird. Auch hier wird mittels MSE die in der Verbindungsmeldung 31a und 31b enthaltende APDU "Common-Information-Inform" um die Steuerdaten zur Steuerung der Ruftöne und der optischen Anzeige der Ursprungsanlage 21 erweitert.

Weitere Einzelheiten zu dem Verfahren der Erweiterung des Leistungsmerkmals COMMON-INFORMATION mit Steuerdaten gehen aus der Tabelle gemäß Fig. 5 hervor. Hierbei beinhaltet die Indication-List beispielhaft verschiedene Arten von Anrufen, die als Steuerdaten an die empfangende Telekommunikationsanlage bzw. das empfangende Telekommunikationsendgerät gesendet werden.

Die Ausführung der Erfindung ist nicht auf die beschreibenden Bespiele und hervorgehobenen Aspekte beschränkt, sondern ist im Rahmen der Ansprüche ebenso in einer Vielzahl von Abwandlungen möglich, die im Rahmen fachgemäßen Handelns liegen.

### Bezugszeichenliste

- 1: Steuerungssystem
- 2: Leistungsmerkmal COMMON-INFORMATION
- 3, 4: Leistungsmerkmale 1...n
- 5: ROSE-Konzept
- 6: ACSE
- 7: DSE
- 8: Einheit zur Funktionskoordinierung
- 9: Einheit zur Steuerung des Gespräches
- 10: Einheit zur Steuerung der Generic Functions
- 11: Einheit zur QSIG-Protokollsteuerung
- 12: Signalling-Carriage Mechanism (SCM)
- 21: PINX-Ursprungsanlage
- 22: PINX-Transistanlage
- 23: PINX-Zielanlage
- 24a, 24b: Meldung Setup
- 25a, 25b;29a, 29b; 33a, 33b: Leistungsmerkmal COMMON-INFORMATION
- 26a, 26b; 30a, 30b; 34a, 34b: Steuerdaten
- 27a, 27b: Verbindungsmeldung DISCONNECT
- 28a, 28b; 32a, 32b: Cause-Information-Element

## Patentansprüche

1. Verfahren zur Steuerung von Hörtönen und/oder Rufzeichen und/oder optischen Anzeigen von Telekommunikationsendgeräten, die an mindestens zwei private Telekommunikationsanlagen (21, 23) angeschlossen sind, und von mit der Steuerung zusammenhängenden vermittlungstechnischen Abläufen in den Telekommunikationsanlagen (21, 23) in auf QSIG-Standard basierenden Telekommunikationsnetzen,
**dadurch gekennzeichnet, daß**
einem mit einer QSIG-Verbindungsmeldung (24a, 24b; 27a, 27b; 31a, 31b) zwischen den Telekommunikationsanlagen (21, 23) übertragenen Leistungsmerkmal (25a, 25b; 29a, 29b; 33a, 33b) neudefinierte Steuerdaten (26a, 26b; 30a, 30b; 34a, 34b) zur Steuerung der Hörtöne bzw. Rufzeichen bzw. optischen Anzeigen des empfangenden Telekommunikationsendgerätes und der vermittlungstechnischen Abläufe der Telekommunikationsanlagen (21, 23) mitgegeben werden, wobei die Telekommunikationsanlagen (21, 23) über auf QSIG-Standard basierenden Leitungen miteinander verbunden sind und die Steuerdaten (26a, 26b; 30a, 30b; 34a, 34b) auf den Telekommunikationsanlagen und den auf QSIG-Standard basierenden Leitungen verteilt sind sowie mittels die Leitungen steuernden Prozesse erzeugt werden.

2. Verfahren nach Anspruch 1,
**dadurch gekennzeichnet, daß**
die Steuerdaten die Art eines von dem Telekommunikationsendgerät und/oder der Telekommunikationsanlage (21, 23) empfangenen oder gesendeten Anrufs, insbesondere eines anlageninternen Anrufs, externen Anrufs, Anrufs mit großer Priorität, Notfallanrufs oder dergleichen vorbestimmter Anrufe, repräsentieren.

3. Verfahren nach Anspruch 1,
**dadurch gekennzeichnet, daß**
die Steuerdaten auch Angaben über die Art einer mit einer rufenden, vorzugsweise als erstes Telekommunikationsendgerät oder Anschluß zu einer Amtsleitung ausgebildete Kommunikationseinrichtung bestehenden weiteren Verbindung, insbesondere eines Telekommunikationsanlagen-internen Anrufs oder Telekommunikationsanlagen-externen Anrufs, enthalten, wobei die Steuerdaten Informationen über die neue und die bestehende weitere Verbindung des rufenden Teilnehmers enthalten, wobei die Steuerdaten Hörtöne und/oder Rufzeichen und/oder optischen Anzeigen eines zweiten, gerufenen Telekommunikationsendgerätes steuern.

4. Verfahren nach einem der vorangegangenen Ansprüche,
**dadurch gekennzeichnet, daß**
zur Steuerung der Hörtöne und/oder Rufzeichen und/oder optischen Anzeigen die mit einer rufenden Einrichtung verbundene Telekommunikationsanlage diejenigen Steuerdaten, die von der mit dem empfangenden Telekommunikationsendgerät verbundenen Telekommunikationsanlage gesendet werden, auswertet.

5. Verfahren nach einem der Ansprüche 1 - 4,
**dadurch gekennzeichnet, daß**
die Steuerdaten (26a, 26b; 30a, 30b; 34a, 34b) mittels des Verfahrens MSE zur Erweiterung von standardisierten Leistungsmerkmalen einem erweiterten Leistungsmerkmal COMMON-INFORMATION (25a, 25b; 29a, 29b; 33a, 33b) zugeordnet werden.

6. Verfahren nach einem der vorangegangenen Ansprüche,
**dadurch gekennzeichnet, daß**
die Verbindungsmeldungen (24a, 24b; 27a, 27b; 31a, 31b) Meldungen vom Typ SETUP, CONNECT, DISCONNECT, INFORMATION, PROGRESS, ALERT umfassen, die einen Verbindungsauf-und/oder -abbau zwischen sendenden und dem empfangenden Telekommunikationsendgeräten und/oder Telekommunikationsanlagen (21, 23) steuern.

7. Verfahren nach einem der Ansprüche 1 - 5,
**dadurch gekennzeichnet, daß**
die Verbindungsmeldungen (24a, 24b; 27a, 27b; 31a, 31b) eine unabhängig von einer Meldung zum Verbindungsauf-und -abbau zu übertragende "FACILITY"-Meldung umfassen.

8. Verfahren nach einem der vorangegangenen Ansprüche,
**dadurch gekennzeichnet, daß**
zur Übertragung der Leistungsmerkmale auf QSIG-Standard basierende Fest- oder Wählverbindungen verwendet werden.

9. Verfahren nach einem der vorangegangenen Ansprüche,
**dadurch gekennzeichnet, daß**
zur Übertragung der Leistungsmerkmale auf QSIG-Standard basierende IP-Gateways für den Zugang zum Internet verwendet werden.

10. Telekommunikationssystem zur Durchführung des Verfahrens nach einem der vorangegangenen Ansprüche,
**gekennzeichnet durch**
ein zusätzliches Leistungsmerkmal, welches die Steuerdaten (26a, 26b; 30a, 30b; 34a, 34b) zur Steuerung der Hörtöne und/oder Rufzeichen und/oder optischen Anzeigen der empfangenden Telekommunikationsendgeräte enthält und die Erweiterung eines standardisierten, mittels eines QSIG-Protokolls übertragenen Leistungsmerkmals (25a, 25b; 29a, 29b; 33a, 33b) darstellt.

11. Telekommunikationssystem nach Anspruch 10,
**dadurch gekennzeichnet, daß**
das standardisierte Leistungsmerkmal (25a, 25b; 29a, 29b; 33a, 33b) das COMMON-INFORMATION-Leistungsmerkmal im QSIG-Standard ist.

12. Telekommunikationssystem nach Anspruch 10 oder 11,
**gekennzeichnet durch**
eine die Verbindungsmeldung mit dem Leistungsmerkmal sendende Kommunikationseinrichtung, die als Telekommunikationsendgerät oder als Anschluß einer Amtsleitung ausgebildet ist.

13. Telekommunikationssystem nach einem der Ansprüche 10 - 12,
**gekennzeichnet durch**
eine zwischen zwei Telekommunikationsanlagen angeordnete Transit-Telekommunikationsanlage.
